# EUROPEAN PATENT SPECIFICATION

(11) **EP 1 529 619 B1**
(45) Date of publication and mention of the grant of the patent: **21.05.2008**
(21) Application number: 04026147.1
(22) Date of filing: 04.11.2004
(51) Int. Cl.: B29C 47/06, B29C 47/00, B29C 47/78

(54) **Extruded tubular profile made of a material such as fiberglass-reinforced plastics, and associated extrusion machine for making the profile**
Extrudierte Hohlprofile aus glasfaserverstärktem Kunststoff und Vorrichtung zu deren Herstellung
Profilé tubulaire extrudé en matière plastique renforcée par des fibres de verre et dispositif pour sa fabrication

(30) Priority: 06.11.2003 IT BO20030654
(43) Date of publication of application: 11.05.2005
(73) Proprietor: Frabbi, Cesare, 40051 Mezzolara Di Budrio Bologna (IT)
(72) Inventor: Frabbi, Cesare, 40051 Mezzolara Di Budrio Bologna (IT)
(74) Representative: Modiano, Micaela Nadia

(56) References cited:
- WO-A-20/04083541
- DE-A1- 2 343 650
- DE-A1- 10 163 521
- FR-A- 2 579 926
- FR-A- 2 831 481
- US-A- 4 492 063
- US-A- 4 983 333

## Description

The present invention relates to an extruded tubular profile made of a material such as fiberglass-reinforced plastics and to an associated extrusion machine for making the profile.

In the particular field of extruded profiles made of a material such as plastics, for example polyethylene, polypropylene or others, the low flexural strength of these profiles is known and is showing even when the profile is used as a handle or as an extension.

Extruded profiles made of plastic material reinforced with glass fibers distributed throughout the mass of the profile in a relatively uniform manner are known: in these profiles, the reinforcing fibers surface in certain points of the mass, becoming rather unpleasant aesthetically.

Moreover, it has been found that when excessively viscous plastic material is used in producing articles reinforced with glass fibers that are concentrated in certain sections in the mass of the plastic material, said material is unable to impregnate the glass fibers, which accordingly do not become monolithic with the plastic material.

WO 2004/0831481 discloses an extrusion machine for a reinforced profile comprising reels (11) of reinforcment cables (20) fed directly through passages (12) in a shaping die (5) of extruded material.

The aim of the present invention is to provide extruded profiles reinforced with glass fibers in which the fibers are present only inside the mass of plastic material and are not present at the surface and to provide an extrusion machine that allows to provide fiberglass-reinforced profiles of any kind.

Within this aim, an object of the present invention is to provide an extruded profile that is simple, relatively easy to provide in practice, safe in use, effective in operation, and has a relatively low cost.

In accordance with the invention, there is provided an extrusion machine for making an extruded tubular profile as defined in the appended claims.

Further characteristics and advantages of the present invention will become better apparent from the following detailed description of a preferred but not exclusive embodiment of an extruded tubular profile made of a material such as fiberglass-reinforced plastics and of the associated extrusion machine according to the invention, illustrated by way of nonlimiting example in the accompanying drawings, wherein:
Figure 1 illustrates a plurality of sectional views of profiles reinforced with glass fibers according to the invention;
Figure 2 is a schematic side view of an extrusion machine for providing the profile;

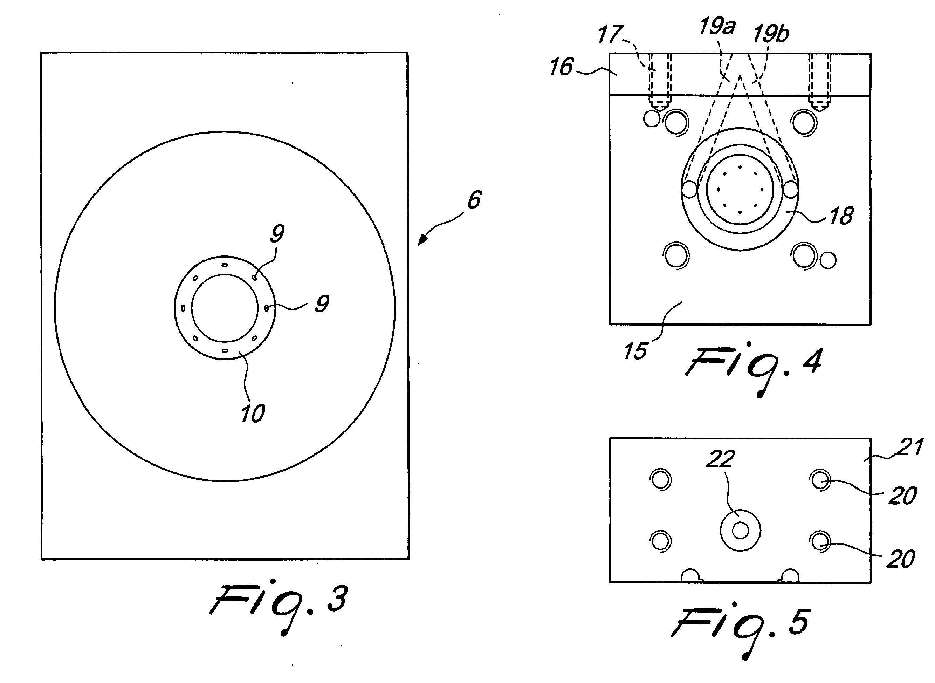

Figure 3 is a front view of the inlet of an extruder equipped to provide the profile according to the invention;
Figure 4 is a sectional front view, taken along a central plane of said extruder;
Figure 5 is a rear view of the outlet of the extruder.

With reference to the figures, the reference numeral 1 designates an extruded tubular profile made of a material such as plastics reinforced with glass fibers and the reference numeral 2 designates the corresponding extrusion machine for making the profile; the plastic-like material used can be polyvinyl chloride, polyethylene, polypropylene, ABS and any thermoplastic material.

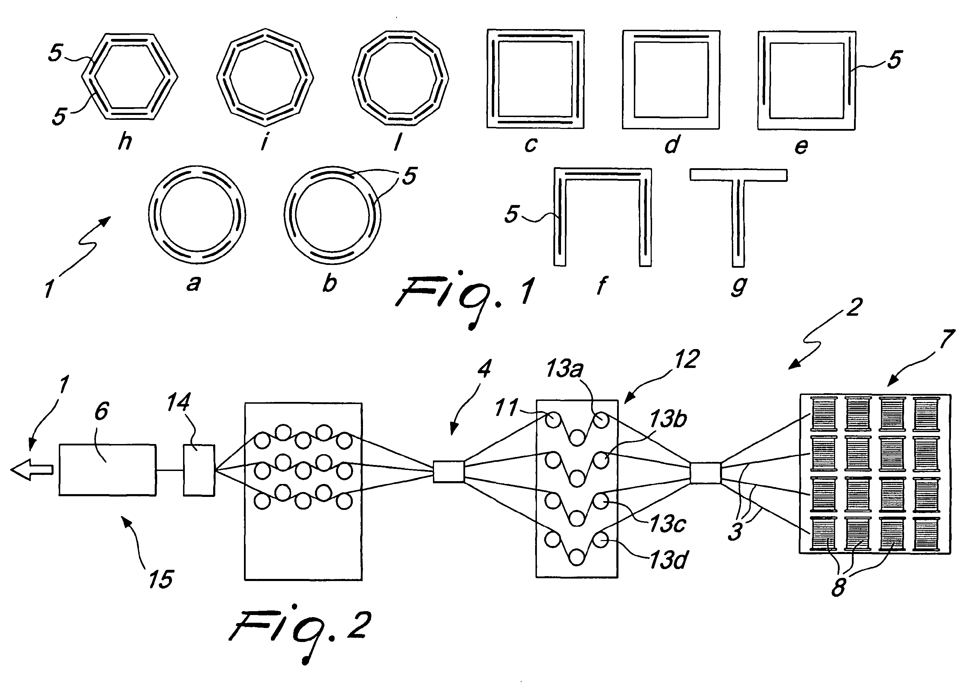

The profile 1 can have any cross-section (round, square, hexagonal, octagonal, decagonal, oval or others) and is reinforced with at least one strand 3 made of glass fibers: Figure 1 shows, by way of example, some cross-sections of the profile a, b, c, d, e, f, g, h, i, 1, in which strands, grouped or distributed in particular bands, are distributed.

The strands 3 are embedded while hot in the thickness of the profile during extrusion, and are made of pretreated glass fibers: the extrusion machine 3 is provided with a unit 4 for preheating the strand.

The strand 3 is (pre)treated, in that it is impregnated, while hot, with materials such as plastics and then cooled and collected on a reel 8.

The strands may be a plurality, grouped side by side, so as to form one or more bands 5.

The profile 1 has a preferably tubular hollow cross-section that is shaped like a regular or irregular polygon, and in which the band or bands 5 of strands are distributed along one or more sides of the polygon.

The machine 2 comprises a magazine 7, which is arranged upstream of an extrusion head 6 for plastic material and supports rotatably a plurality of reels 8 for winding pretreated strands: each strand is guided in a respective hole 9 of a rearward front plate 10 of the extrusion head 6.

A comb-like array 12 of rollers 13 is arranged between the magazine 7 of reels of strand and the plate 10 rigidly coupled to the extrusion head; the rollers 13 are distributed on various planes 13a, 13b, 13c, and are arranged in the sequence I, II, III, IV; the strands are made to pass in a zigzag fashion over the series of co-planar rollers, which are provided with heating elements for example of the electric resistor type 11, which are suitable to bring to a pasty consistency the material that impregnates the strand, in order to allow the intimate adhesion of the strand to the profile that is gradually extruded.

Before entering the extruder, the strands are made to pass through a heated distribution unit 14, which distributes the strands so that they are arranged tidily in bands 5 constituted by groups of strands 3 arranged side by side.

The extrusion head 6 is constituted by a block 15, which is made of metallic material and is provided with a massive cover 16; said cover and said block can be fixed together by means of bolts 17, and in said block there is an axial duct 18 for the forced advancement of the plastic material to be extruded in the pasty state, which arrives from two inclined feed ducts 19a and 19b.

The plate 10 is fixed to the face of the extrusion head that is directed toward the distribution unit 14 and is crossed by holes 9 that correspond to the regions where the bundle of strands enters the die: a body 21 shaped like a parallelepiped can be fixed detachably, by means of bolts 20, on the other face of the extruder, and the outer surface of the body 21 forms an extrusion section 22, which in the particular case is tubular.

The operation of the invention is intuitive: given a profile having any cross-section that can be obtained by extrusion, the regions where the reinforcement fibers are to be arranged are determined according to the intended use.

The strands are made to pass in a zigzag fashion over the rollers of the heating array and then through the holes 9 of the plate 10 in the extrusion head, where an intimate cohesion between the fibers and the plastics occurs because the plastic material with which the strands have been pretreated is consistent with the material that constitutes the profile: for a profile made of a material such as PVC or polyethylene, the strand is pretreated with material such as respectively PVC and polyethylene or other compatible material.

It has thus been shown that the invention has achieved the intended aim and object.

The invention thus conceived is susceptible of numerous modifications and variations, all of which are within the scope of the appended claims.

All the details may further be replaced with other technically equivalent ones.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

The embodiment of the present invention shall be carried out in the most scrupulous compliance with the statutory and regulatory provisions related to the products of the invention or correlated thereto and following any required authorization of the corresponding competent authorities, with particular reference to regulations related to safety, environmental pollution and health.

In practice, the materials used, as well as the shapes and dimensions, may be any according to requirements without thereby abandoning the protective scope of the appended claims.

This application claims priority from Italian Patent Application No. BO2003A000654.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An extrusion machine (2) for making an extruded tubular profile (1) made of a material such as fiberglass-reinforced plastics and comprising at least one longitudinal strand (3) of pretreated glass fibers that is embedded, while hot, in the thickness of the profile during extrusion thereof on the extrusion machine (2) that is provided with a unit (4) for preheating said strand, the extrusion machine (2) further comprising, upstream of an extrusion head (6) for plastic material, a magazine (7) for rotatably supporting a plurality of reels (8) for winding pretreated strands (3), one strand (3) being guided in a respective hole (9) of a front rearward plate (10) of the extrusion head (6) arranged downstream of said preheating unit (4), and a comb-like array (12) of rollers (13) arranged between said magazine (7) of reels (8) of strands (3) and said preheating unit (4), said rollers (13) being distributed on various planes and being provided with heating elements (11), which are suitable to bring to a pasty state the material that impregnates the strands (3) in order to allow adhesion of the strand (3) to the extruded profile (1).

2. The extrusion machine of claim 1, **characterized in that** said heating elements are of the electric resistor type (11) of said rollers (13).

3. The extrusion machine of claim 1, **characterized in that** it further comprises a heated distribution unit (14) arranged between said preheating unit (4) and said extrusion head (6) for distributing said strands (3) into bands (5) in said extruded tubular profile (1).

## Patentansprüche

1. Extrusionsvorrichtung (2) zur Herstellung eines extrudierten rohrförmigen Profils (1), das aus einem Material wie zum Beispiel glasfaserverstärktem Kunststoff hergestellt wird, und Folgendes umfassend: mindestens einen Längsstrang (3) von vorbehandelten Glasfasern, der, während er heiß ist, in die Dicke des Profils während dessen Extrusion auf der Extrusionsvorrichtung (2) eingebettet wird, die mit einer Einheit (4) zum Vorerhitzen des Strangs ausgestattet ist, wobei die Extrusionsvorrichtung (2) weiter Folgendes umfasst: stromaufwärts von einem Extruderkopf (6) für Kunststoffmaterial, ein Magazin (7), um drehbar eine Vielzahl von Haspeln (8) zum Wickeln vorerhitzter Stränge (3) zu halten, wobei ein Strang (3) in ein entsprechendes Loch (9) einer vorderen rückwärtigen Platte (10) des Extruderkopfs (6) geführt wird, die stromabwärts von der Vorerhitzungs-Einheit (4) angeordnet ist, und eine kammähnliche Matrix (12) von Rollen (13), die zwischen dem Magazin (7) von Haspeln (8) von Strängen (3) und der Vorerhitzungs-Einheit (4) angeordnet ist, wobei die Rollen (13) auf verschiedenen Ebenen verteilt sind und mit Erhitzungs-Elementen (11) ausgestattet sind, die geeignet sind, das Material, das die Stränge (3) imprägniert, in einen pastenartigen Zustand zu bringen, um ein Anhaften des Strangs (3) an dem extrudierten Profil (1) zu ermöglichen.

2. Die Extrusionsvorrichtung gemäß Anspruch 1, **dadurch gekennzeichnet, dass** die Erhitzungs-Elemente vom Typ elektrischer Widerstände (11) der Rollen (13) sind.

3. Die Extrusionsvorrichtung gemäß Anspruch 1, **dadurch gekennzeichnet, dass** sie weiter eine erhitzte Verteilungseinheit (14) umfasst, die zwischen der Vorerhitzungs-Einheit (4) und dem Extruderkopf (6) angeordnet ist, um die Stränge (3) in Bänder (5) in dem extrudierten rohrförmigen Profil (1) zu verteilen.

## Revendications

1. Extrudeuse (2) destinée à réaliser un profilé tubulaire extrudé (1) constitué de matière telle que le plastique renforcé par des fibres de verre et comprenant au moins un brin longitudinal (3) de fibres de verre prétraitées qui est noyé, pendant qu'il est chaud, dans l'épaisseur du profilé pendant l'extrusion de celui-ci sur l'extrudeuse (2) dotée d'une unité (4) pour le préchauffage dudit brin, l'extrudeuse (2) comprenant également, en amont d'une tête d'extrusion (6) pour la matière plastique, un magasin (7) pour supporter de façon rotative une pluralité de bobines (8) pour enrouler les brins prétraités (3), un brin (3) étant guidé dans un trou respectif (9) d'une plaque arrière frontale (10) de la tête d'extrusion (6) agencée en aval de ladite unité de préchauffage (4), et un ensemble semblable à un peigne (12) de rouleaux (13) agencés entre ledit magasin (7) de bobines (8) de brins (3) et ladite unité de préchauffage (4), lesdits rouleaux (13) étant répartis sur divers plans et étant dotés d'éléments de chauffage (11), adaptés pour amener à un état pâteux la matière qui imprègne les brins (3) afin de permettre l'adhérence du brin (3) au profilé extrudé (1).

2. Extrudeuse selon la revendication 1,
**caractérisée en ce que** lesdits éléments de chauffage sont du type à résistance électrique (11) desdits rouleaux (13).

3. Extrudeuse selon la revendication 1,
**caractérisée en ce qu'**elle comprend également une unité de distribution chauffée (14) agencée entre ladite unité de préchauffage (4) et ladite tête d'extrusion (6) pour distribuer lesdits brins (3) en bandes (5) dans ledit profilé tubulaire extrudé (1).
